# EUROPEAN PATENT APPLICATION

(11) **EP 1 607 923 A2**
(43) Date of publication of application: **21.12.2005**
(21) Application number: 05008542.2
(22) Date of filing: 19.04.2005
(51) Int. Cl.: G08C 17/00

(54) **Apparatus and method for controlling a portable home theater using a wireless terminal**

(30) Priority: 27.05.2004 KR 2004037827
(71) Applicant: SAMSUNG ELECTRONICS CO., LTD., Suwon-si, Gyeonggi-do 442-742 (KR)
(72) Inventor: Lee, Jae-Ho, Samsung Electronics Co., Ltd, Suwon-si, Gyeonggi-do (KR); Kim, Hark-Sang, Samsung Electronics Co., Ltd, Suwon-si, Gyeonggi-do (KR); Choi, Do-Hwan, Samsung Electronics Co., Ltd, Suwon-si, Gyeonggi-do (KR); Ryu, Yeong-Moo, Samsung Electronics Co., Ltd, Suwon-si, Gyeonggi-do (KR)
(74) Representative: Lang, Johannes

(57) **Abstract**

An apparatus and method for controlling a portable home theater (PHT) with multiple functions using a wireless terminal are provided. When the PHT is selected in the wireless terminal, a determination is made as to whether the PHT is connected. When the PHT is connected, an operating mode is switched to a PHT control mode. In the PHT control mode, a function provided in the PHT is selected. The wireless terminal then controls the selected function provided in the PHT.

## Description

### BACKGROUND OF THE INVENTION

### Field of the Invention

The present invention relates to a wireless terminal. More particularly, the present invention relates to an apparatus and method by which a wireless terminal can use multiple functions provided in a portable home theater.

### Description of the Related Art

Currently, wireless terminals are developing into a structure capable of transmitting high-speed data in addition to a voice communication function. That is, when a mobile communication system of the International Mobile Telecommunications-2000 (IMT-2000) standard is implemented, high-speed data communication as well as voice communication can be implemented using the wireless terminals. Data capable of being processed in the wireless terminal can be packet data and picture data. When equipped with a camera or television (TV) receiver, the wireless terminal performs a function capable of displaying a picture signal. Thus, the wireless terminal equipped with the camera can take pictures to display moving and still pictures, and can transmit the pictures.

The wireless terminal equipped with the camera as described above provides a function for taking the moving and still pictures, and the wireless terminal equipped with the TV receiver provides a function for receiving TV picture data and enabling a user to view a TV program. The wireless terminal with a Moving Picture Experts Group (MPEG) audio layer-III (MP3) function provides a function for outputting an MP3 file.

However, there is a problem in that the wireless terminal with additional functions is expensive, and a user of a conventional wireless terminal providing only a voice call function must purchase the expensive wireless terminal in order to use the above-described additional functions.

### SUMMARY OF THE INVENTION

To address the above and other problems, an object of the present invention is to provide an apparatus and method by which a wireless terminal can use various functions provided in a portable home theater by controlling the portable home theater with multiple functions.

In accordance with an aspect of the present invention, the above and other objects can be accomplished by an apparatus and method for controlling a portable home theater (PHT) with multiple functions using a wireless terminal. The apparatus and method comprise (a) determining whether or not the PHT is connected when the PHT is selected in the wireless terminal; (b) switching an operating mode to a PHT control mode when the PHT is connected; (c) selecting a function provided in the PHT if the wireless terminal is in the PHT control mode; and (d) controlling, by the wireless terminal, the selected function provided in the PHT.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a diagram illustrating a wireless terminal and a portable home theater connected in a wired fashion in accordance with an embodiment of the present invention;
FIG. 2 is a diagram illustrating a wireless terminal and a portable home theater connected in a wireless fashion in accordance with an embodiment of the present invention;
FIG. 3 is a block diagram illustrating the wireless terminal shown in FIG. 1 and FIG. 2;
FIG. 4 is a block diagram illustrating the portable home theater shown in FIG. 1 and FIG. 2; and
FIG. 5 is a flow chart illustrating a process for controlling the portable home theater in the wireless terminal in accordance with an embodiment of the present invention.

### DETAILED DESCRIPTION OF THE PREFERRED EMBODIMENTS

Embodiments of the present invention will now be described in detail with reference to the accompanying drawings. In the drawings, the same elements are denoted by the same reference numerals even though they are depicted in different drawings.

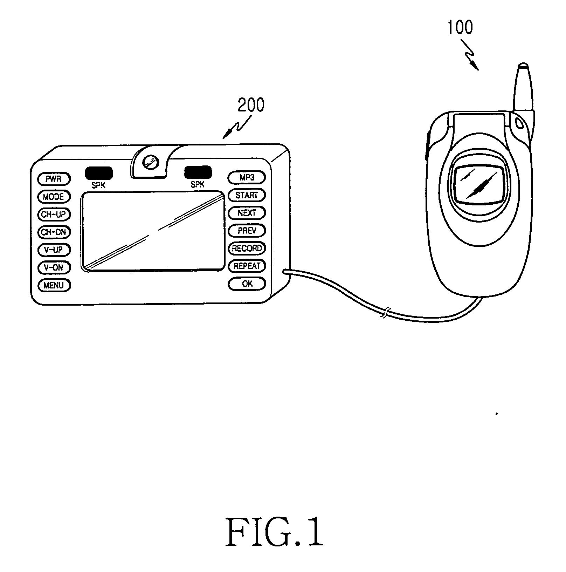

FIG. 1 is a diagram illustrating a wireless terminal and a portable home theater connected in a wired fashion in accordance with an embodiment of the present invention. Referring to FIG. 1, the wireless terminal 100 performs a telephone call function through wireless communication. When the wireless terminal 100 is connected to the portable home theater (hereinafter, referred to as "PHT") 200, the wireless terminal 100 is set as a master and the PHT 200 is set as a slave. The wireless terminal 100 can use functions provided in the PHT 200 by controlling the PHT 200. The PHT 200 has a Moving Picture Experts Group (MPEG) audio layer-III (MP3) function, a camera function, a television (TV) reception function, and so on, and can perform these functions on its own. Moreover, when the PHT 200 is connected to the wireless terminal 100, the functions provided in the PHT 200 are performed under the control of the wireless terminal 100.

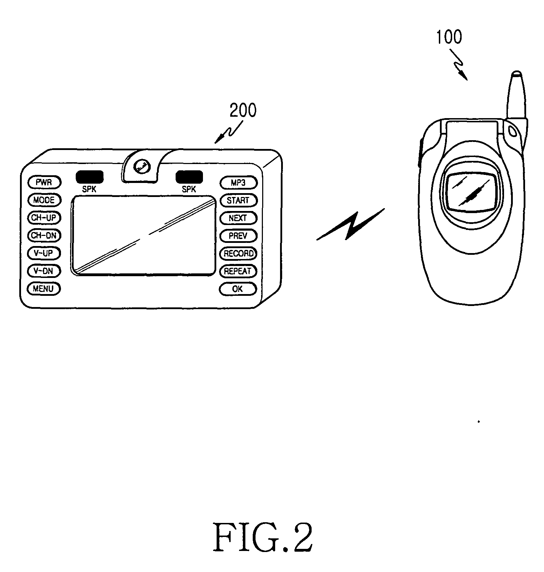

When the wireless terminal 100 and the PHT 200 are connected in the wired fashion as shown in FIG. 1, they can perform data communication. Alternatively, when the wireless terminal 100 and the PHT 200 have a radio frequency (RF) module, respectively, they can perform data communication through the RF module as shown in FIG. 2.

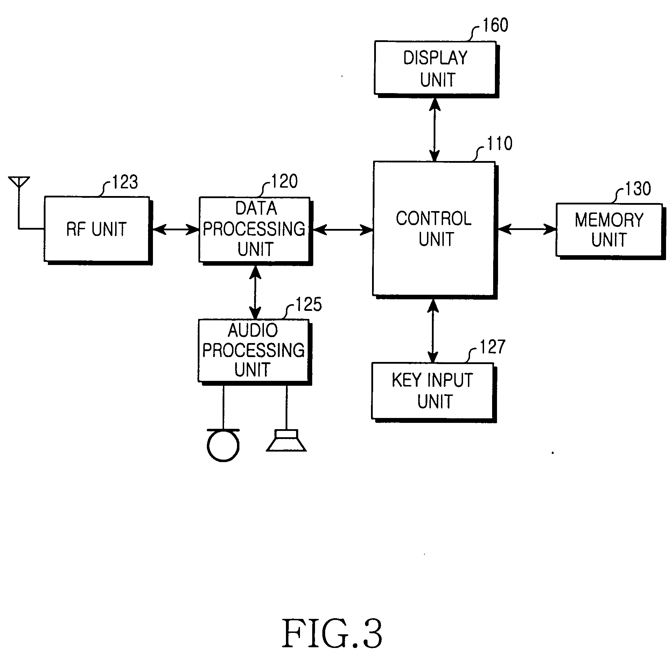

FIG. 3 is a block diagram illustrating a configuration of the wireless terminal 100. The configuration of the wireless terminal 100 will now be described with reference to FIG. 3. An RF unit 123 performs a wireless communication function for the wireless terminal 100. The RF unit 123 includes an RF transmitter (not shown) for up-converting and amplifying a frequency of a signal to be transmitted and an RF receiver (not shown)for performing low-noise amplification on a received signal and down-converting a frequency of the received signal.

A data processing unit 120 includes a transmitter (not shown)for coding and modulating the signal to be transmitted and a receiver (not shown) for demodulating and decoding the received signal. That is, the data processing unit 120 can be constructed by a modulator-demodulator (MODEM) and a coder-decoder (CODEC). Here, the CODEC includes a data CODEC for processing packet data, etc. and an audio CODEC for processing an audio signal such as voice, etc. An audio processing unit 125 performs a function for reproducing a received audio signal output from the audio CODEC of the data processing unit 120 or outputting a transmission audio signal generated from a microphone to the audio CODEC of the data processing unit 120.

A memory unit 130 can be constructed using program and data memories, and the like. The program memory can store programs for controlling a general operation of the wireless terminal 100 and programs for controlling the PHT 200 in accordance with the embodiment of the present invention. The data memory performs a function for temporarily storing data generated while the programs are executed.

A control unit 110 performs a function for controlling the overall operation of the wireless terminal 100. Alternatively, the control unit 110 can include the data processing unit 120. When the wireless terminal 100 is connected to the PHT 200 in accordance with the embodiment of the present invention, the control unit 110 performs a control operation so that an operating mode of the wireless terminal 100 is switched to a PHT control mode. Moreover, the control unit 110 performs a control operation so that a function provided in the PHT 200 is performed in accordance with the embodiment of the present invention. The control unit 110 performs a control operation so that the processed data is output to a display unit 160 and a speaker of the wireless terminal 100.

The display unit 160 displays user data output from the control unit 110. Here, the display unit 160 can be used as a liquid crystal display (LCD). If used as an LCD, the display unit 160 can include an LCD controller, a memory capable of storing picture data, an LCD element, etc. When the LCD is implemented using a touch-screen system, it can operate as an input unit. The display unit 160 displays signals of still and moving pictures output from the PHT 200 on a screen. Moreover, the display unit 160 displays TV picture signals output from the PHT 200 on the screen in accordance with the embodiment of the present invention.

A key input unit 127 includes keys necessary for inputting numbers and letter information and function keys necessary for setting various functions. Moreover, the key input unit 127 includes function keys necessary for executing the functions of the PHT 200 in the PHT control mode in accordance with the embodiment of the present invention.

Operation of the wireless terminal 100 will now be described with reference to FIG. 3. When a user sets a signal transmission mode after a dialing operation through the key input unit 127, the control unit 110 detects the set signal transmission mode, controls the data processing unit 120 to process the received dialed information, and controls the RF unit 123 to convert the processed information into an RF signal and output the RF signal. Subsequently, when the called party generates a response signal e.g., picking up the phone, the control unit 110 detects the response signal through the RF unit 123 and the data processing unit 120. The user performs a communication function by means of a voice communication path established through the audio processing unit 125.

In contrast, when a signal reception mode is performed, the control unit 110 detects the signal reception mode through the data processing unit 120 and controls the audio processing unit 125 to generate a ringtone. Subsequently, when the user initiates a response, the control unit 110 detects the response. The user performs a communication function by means of a voice communication path established through the audio processing unit 125. If a standby mode or character communication is entered/performed, the control unit 110 controls the display unit 160 to display character data processed by the data processing unit 120.

Although an example of voice communication in the signal transmission and reception modes has been described, a data communication function for communicating packet data and picture data can also be performed. It should also be appreciated by those skilled in the art, that a called party may not be required since a voicemail system or answering machine can function as the called party.

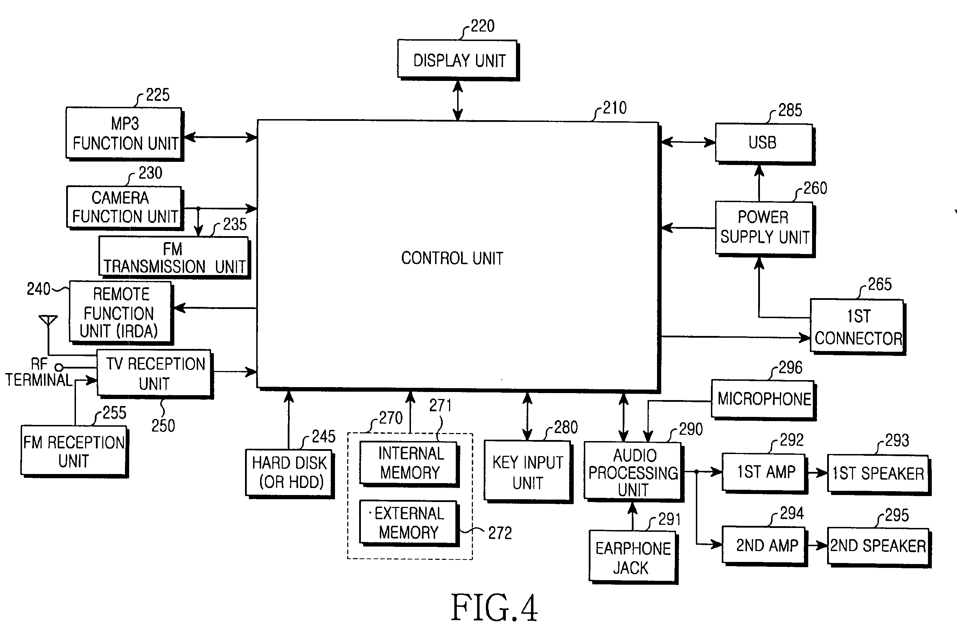

FIG. 4 is a block diagram illustrating a configuration of the PHT 200. The configuration of the PHT 200 will be described with reference to FIG. 4. An MPEG audio layer-III (MP3) function unit 225 is constructed using a decoder and a digital-to-analog (D/A) converter. Under control of a control unit 210, the decoder decodes an MP3 file stored in a hard disk 245 and an external memory 272, and the D/A converter converts the MP3 file of a decoded digital audio signal into an analog audio signal to output the analog audio signal.

A camera function unit 230 is constructed using a camera part and a picture processing part. The camera part includes a camera sensor for capturing picture data and converting a captured optical signal into an electrical signal, and a signal processor for converting an analog picture signal captured by the camera sensor into digital data. Here, it is assumed that the camera sensor is a charge coupled device (CCD) sensor, and the signal processor can be implemented by a digital signal processor. The camera sensor and the signal processor can be implemented in a single body, or can be separately implemented. The picture processing part performs a function for generating screen data to display a picture signal output from the camera part. The picture processing part processes the picture signal output from the camera part in frame units. A display unit 220 outputs the frame picture data appropriate to the characteristics and size of the display unit 220. The picture processing part includes a picture coder-decoder (CODEC), and performs a function for compressing the frame picture data displayed on the display unit 220 according to a preset compression scheme or for decoding the compressed frame picture data into original frame picture data. Here, the picture CODEC can be a Joint Picture Experts Group (JPEG) CODEC, MPEG-4 CODEC, Wavelet CODEC and so on. It is assumed that the picture processing part has an on-screen display (OSD) function, and the picture processing part can output on-screen data based on the size of the picture to be displayed under control of the control unit 210. The camera function unit 230 can output, to an external device, picture data captured through a frequency modulation (FM) reception unit 255.

A remote control function unit 240 performs a function for controlling the external device through a wireless communication module such as infrared data association (IrDA) or Bluetooth provided in the PHT 200.

A TV reception unit 250 is constructed using a tuner, a decoder and a picture signal processor. The tuner performs a function for receiving a TV picture signal of a channel selected under control of the control unit 210 and converting a frequency of the received picture signal. The decoder performs a function for demodulating and decoding the TV picture signal output from the tuner. The decoder decodes the TV picture signal and outputs color signals R, G, and B and sync signals (i.e., horizontal and vertical sync signals). The picture signal processor performs data communication with the control unit 210, and performs a signal processing function for displaying the TV picture signal output from the decoder under control of the control unit 210. The picture signal processor performs a function for processing the picture signal output from the decoder and outputting the processed picture signal to a corresponding area of the display unit 220. The tuner can not only receive, from an antenna, the TV picture signal of the channel selected under control of the control unit 210, but can also receive the TV picture signal through an RF terminal connected to the external device. Moreover, the tuner can receive the TV picture signal from the external device through the FM reception unit 255.

An FM transmission unit 235 performs frequency modulation into a specified frequency channel (i.e., a frequency channel not associated with the standardized broadcast frequencies ranging between 88.1 and 108 MHz) set by the user. Here, an FM radio frequency must be set equal to the specific frequency channel of the FM transmission unit 235 set by the user so that the picture and audio signals received from the FM transmission unit 235 can be viewed and listened to by means of the external device.

The FM reception unit 255 receives, from the external device, picture and audio signals frequency-modulated into a specified frequency channel (i.e., a frequency channel not associated with the standardized broadcast frequencies ranging between 88.1 and 108 MHz) set by the user. Here, an FM radio frequency must be set equal to the specific frequency channel of the external device so that the picture and audio signals received from the external device can be viewed and listened to by means of the PHT 200.

A universal serial bus (USB) 285 is connected to a wireless terminal or a personal computer (PC). When the USB 285 is connected to the wireless terminal in accordance with the embodiment of the present invention, the PHT 200 can transmit data to and receive data from the wireless terminal through the USB 285. Moreover, the PHT 200 can transmit data to and receive data from the wireless terminal 100 through an RF module wirelessly.

When inserted into a cradle for supplying power to the PHT 200 so that it can receive the power, a first connector 265 contacts a connector of the cradle. The first connector 265 outputs, to a power supply unit 260, power provided through the cradle in contact with the connector of the cradle. Moreover, the first connector 265 sends, through the cradle, data output under control of the control unit 210. The power supply unit 260 receives and stores power output through the first connector 265, and supplies the power to the PHT 200 when it operates.

The hard disk (or hard disk drive (HDD)) 245 can store not only data of the PHT 200 but also an MP3 file, TV picture data, still and moving pictures, etc. A memory unit 270 is constructed using an internal memory 271 and the external memory 272. The internal memory 271 can be constructed using program and data memories. The program memory can store programs necessary for controlling a general operation of the PHT 200. The data memory performs a function for temporarily storing data generated while the programs are executed. The external memory 272 has a structure capable of being embedded into and separated from the PHT 200. The external memory 272 stores various content such as game and MP files, etc., and can provide the stored contents to the PHT 200. Through the external memory 272 capable of being embedded into and separated from the PHT 200, the data of the PHT 200 can be provided to the wireless terminal and the PC, and data stored in the wireless terminal and the PC can be provided to the PHT 200.

The control unit 210 performs a function for controlling the overall operation of the PHT 200. Moreover, when the PHT 200 is connected to the wireless terminal 100 in accordance with the embodiment of the present invention, the control unit 210 operates the function provided in the PHT 200 under control of the control unit 110 of the wireless terminal 100.

The display unit 220 can be used as a liquid crystal display (LCD). In this case, the display unit 220 can include an LCD controller, a memory capable of storing picture data, an LCD element, etc. Here, when the LCD is implemented using a touch-screen system, it can operate as an input unit. The display unit 220 displays a picture signal output from the camera function unit 230 on a screen, and displays a TV picture signal output from the TV reception unit 250 on the screen. A key input unit 280 includes function keys necessary for setting the functions provided in the PHT 200 and keys necessary for performing the functions in a set function mode.

An audio processing unit 290 includes an audio CODEC for processing an audio signal such as voice, etc. After a first amp 292 and a second amp 294 amplify the audio signal output from the control unit 210, the amplified audio signal is reproduced through a first speaker 293 and a second speaker 295 or through an earphone (not shown) connected to an earphone jack 291. Alternatively, the audio processing unit 290 performs a function for outputting an audio signal generated from a microphone 296 to the control unit 210.

Now, operation of the PHT 200 will be described with reference to FIG. 4. When a power supply key is input which is provided in the key input unit 280 of the PHT 200, the control unit 210 detects the input power supply key and turns on the power supply of the PHT 200. When a menu key is input in a state in which the power supply of the PHT 200 is turned on, the control unit 210 detects the input menu key and controls the display unit 220 to display functions provided in the PHT 200. When an MP3 function is selected from among the functions provided in the PHT 200, the control unit 210 detects the selected MP3 function and controls the MP3 function unit 225 to output an MP3 file. When a camera function is selected from among the functions provided in the PHT 200, the control unit 210 detects the selected camera function and controls the camera function unit 230 to perform the camera function. When a TV reception function is selected from among the functions provided in the PHT 200, the control unit 210 detects the selected TV reception function and controls the TV reception unit 250 to perform the TV reception function. When a remote control function is selected from among the functions provided in the PHT 200, the control unit 210 detects the selected remote control function and enables the remote control function unit 240 to control the external device.

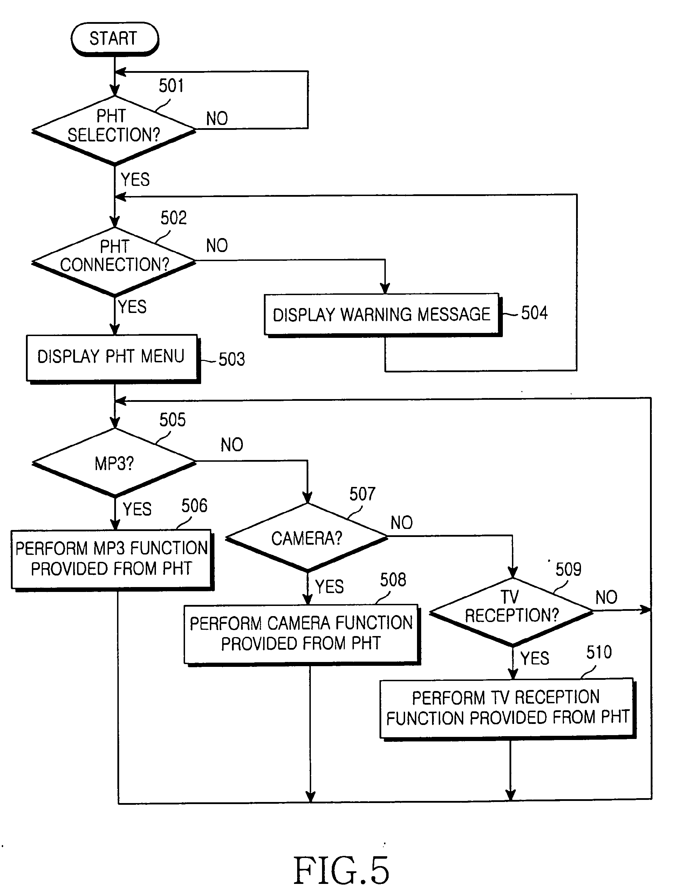

Operations for controlling and using various functions configured in the PHT 200 by means of the wireless terminal 100 constructed as shown in FIG. 3 connected to the PHT 200 constructed as shown in FIG. 4, will now be described in detail with reference to FIG. 5.

FIG. 5 is a flow chart illustrating a process for controlling the PHT 200 in the wireless terminal 100 in accordance with an embodiment of the present invention. It is assumed that the wireless terminal 100 and the PHT 200 are connected in the wired fashion and perform data communication in this embodiment of the present invention.

Now, this embodiment of the present invention will be described in detail with reference to FIGS. 1 to 5. Referring to FIG. 5, when a PHT is selected on a menu of the wireless terminal 100, the control unit 110 detects the selected PHT at step 501, and determines whether or not the wireless terminal 100 and the PHT 200 are connected. If the wireless terminal 100 and the PHT 200 are connected, the control unit 110 detects, at step 502, a state in which the wireless terminal 100 and the PHT 200 are connected, and controls the display unit 160 to display the types of functions provided in the PHT 200 at step 503. However, if the wireless terminal 100 and the PHT 200 are not connected, the control unit 110 detects, at the above step 502, a state in which the wireless terminal 100 and the PHT 200 are not connected and generates a warning message and a warning sound at step 504. Alternatively, if the wireless terminal 100 and the PHT 200 are connected, the control unit 110 detects a state in which the wireless terminal 100 and the PHT 200 are connected and performs a control operation so that an operating mode of the wireless terminal 110 can be automatically switched to a PHT control mode.

When the user of the wireless terminal 100 selects an MP3 function from among the functions provided in the PHT 200, the control unit 110 detects the selected MP3 function at step 505 and controls the wireless terminal 100 to perform the MP3 function provided in the PHT 200 at step 506. At the above step 506, the control unit 110 controls the control unit 210 of the PHT 200 so that the display unit 160 can display a list of MP3 files stored in the PHT 200. When the user selects an MP3 file, the control unit 110 detects the selected MP3 file and notifies the control unit 210 in the PHT 200 of the detected selected MP3 file. The control unit 210 of the PHT 200 controls the MP3 function unit 225 to decode the selected MP3 file and converts the decoded MP3 file into analog form. Then, the control unit 210 sends the converted MP3 file to the wireless terminal 100 connected to the USB 285. The control unit 110 outputs the MP3 file received from the PHT 200 to the speaker through the audio processing unit 125.

When a camera function is selected from among the functions provided in the PHT 200, the control unit 110 detects the selected camera function at step 507 and enables the wireless terminal 100 to perform the camera function provided in the PHT 200 at step 508. At the above step 508, the control unit 110 controls the control unit 210 of the PHT 200 so that the display unit 160 can display menu items provided in the camera function unit 230. When the user selects a picture data capture item, the control unit 110 detects the selected item and notifies the control unit 210 in the PHT 200 of the detected selected item. The control unit 210 of the PHT 200 controls the camera function unit 230 to capture picture data and send the captured picture data to the wireless terminal 100. The control unit 110 controls the display unit 160 to display the picture data received from the PHT 200. The captured picture data can be stored in the wireless terminal 100 or the PHT 200. The user of the wireless terminal 100 can use all functions such as a picture-taking function, an editing function, etc. provided from the camera function unit 230 and can display a result of a corresponding function on the display unit 160. When an audio signal is included in the picture data from the PHT 200, it is output to the speaker through the audio processing unit 125.

When a TV reception function is selected from among the functions provided in the PHT 200, the control unit 110 detects the selected TV reception function at step 509 and enables the wireless terminal 100 to perform the TV reception function provided from the PHT 200 at step 510. At the above step 510, the control unit 110 controls the control unit 210 of the PHT 200 so that a list of channels provided from the TV reception unit 250 is displayed on the display unit 160. When the user selects a desired reception channel, the control unit 110 detects the selected channel and notifies the control unit 210 in the PHT 200 of the detected selected channel. The control unit 210 of the PHT 200 controls the TV reception unit 250, receives TV picture data of the channel selected by the user, and sends the received TV picture data to the wireless terminal 100. The control unit 110 controls the display unit 160 to display the TV picture data received from the PHT 200. An audio signal included in the TV picture data is output to the speaker through the audio processing unit 125.

The wireless terminal 100 receives data from the FM reception unit 250 of the PHT 200 and can display the received data on the display unit 160.

When the wireless terminal receives an incoming call in the PHT control mode, the control unit 110 detects the received incoming call and switches an operating mode to a call mode. When the call is terminated in the call mode, the control unit 110 detects the terminated call and automatically switches the operating mode to the PHT control mode again. When the operating mode is automatically switched to the PHT control mode, the data of the PHT 200 output before the call mode can be continuously output.

As apparent from the above description, the present invention has an advantageous effect in that a wireless terminal can use various functions provided from a portable home theater (PHT) as well as a telephone call function by controlling the PHT with the multiple functions.

Although a certain embodiment of the present invention is disclosed for illustrative purposes, those skilled in the art will appreciate that various modifications, additions and substitutions are possible, without departing from the scope of the invention. Therefore, the present invention is not limited to the above-described embodiment, but the present invention is defined by the claims which follow, along with their full scope of equivalents.

## Claims

1. A method for controlling a portable home theater (PHT) with multiple functions using a wireless terminal, comprising the steps of:
(a) determining whether the PHT is connected when the PHT is selected in the wireless terminal;
(b) switching an operating mode to a PHT control mode when the PHT is connected;
(c) selecting a function provided in the PHT if the wireless terminal is in the PHT control mode; and
(d) controlling, by the wireless terminal, the selected function provided in the PHT.

2. The method of claim 1, wherein the step (d) comprises the steps of:
performing the MP3 function provided from the PHT when an MPEG audio layer-III (MP3) function is selected from among the functions of the PHT;
performing the camera function provided from the PHT when a camera function is selected from among the functions of the PHT; and
performing the TV reception function provided from the PHT when a television (TV) reception function is selected from among the functions of the PHT.

3. The method of claim 1, further comprising the step of:
generating a warning message and a warning sound when the PHT is not connected.

4. The method of claim 1, wherein the operating mode is automatically switched to the PHT control mode when the PHT is connected to the wireless terminal.

5. The method of claim 1, further comprising the steps of:
switching from the operating mode to a call mode when an incoming call is received in the PHT control mode; and
switching from the operating mode to the PHT control mode when the call is terminated in the call mode.

6. An apparatus for controlling a portable home theater (PHT) with multiple functions using a wireless terminal, comprising:
input keys adapted to enter commands for controlling the PHT;
a memory adapted to store user commands;
a controller adapted to determine whether the PHT is connected when the PHT is selected via the wireless terminal, switch from an operating mode to a PHT control mode when the PHT is connected to the wireless terminal, select a function provided in the PHT if the wireless terminal is in the PHT control mode, and control the selected function provided in the PHT.

7. The apparatus of claim 6, wherein the controller is further adapted to perform the MP3 function provided from the PHT when a Moving Picture Expert Group (MPEG) audio layer-III (MP3) function is selected from among the functions of the PHT, control a camera function provided from the PHT when a camera function is selected from among the functions of the PHT, and controlling a television (TV) reception function provided from the PHT when a TV reception function is selected from among the functions of the PHT.

8. The apparatus of claim 6, wherein the controller is further adapted to generate a warning message and a warning sound when the PHT is not connected.

9. The apparatus of claim 6, wherein the operating mode is automatically switched to the PHT control mode when the PHT is connected to the wireless terminal.

10. The apparatus of claim 6, wherein the controller is further adapted to switch the operating mode to a call mode when an incoming call is received when the wireless terminal is in the PHT control mode, and switch from the operating mode to the PHT control mode when the call is terminated in the call mode.
